# EUROPÄISCHE PATENTSCHRIFT

(11) **EP 2 775 464 B1**
(45) Veröffentlichungstag und Bekanntmachung des Hinweises auf die Patenterteilung: **17.01.2018**
(21) Anmeldenummer: 13157939.3
(22) Anmeldetag: 06.03.2013
(51) Int. Cl.: G08B 17/12, G01J 5/00, G01J 5/60, G01J 5/08

(54) **Gefahrenmelder mit einem kontaktlos arbeitenden Wärmestrahlungssensor zur Ermittlung einer Umgebungstemperatur**
Hazard alarm comprising a contactless thermal radiation sensor for determining an ambient temperature
Alarme dotée d'un capteur de rayonnement thermique sans contact pour déterminer une température ambiante

(43) Veröffentlichungstag der Anmeldung: 10.09.2014
(73) Patentinhaber: Siemens Schweiz AG, 8047 Zürich (CH)
(72) Erfinder: Fischer, Martin, 8180 Bülach (CH); Fölmli, Claudio, 6005 Luzern (CH); Liechti, Christian, 8712 Stäfa (CH)
(74) Vertreter: Maier, Daniel Oliver

(56) Entgegenhaltungen:
- EP-A1- 0 419 046
- WO-A1-86/00179
- WO-A1-2005/121727
- US-A1- 2003 222 218

## Beschreibung

Gefahrenmelder, insbesondere Brandmelder, mit einem im Infrarotbereich empfindlichen, kontaktlos arbeitenden Wärmestrahlungssensor zur Ermittlung einer Umgebungstemperatur. Die Erfindung betrifft einen als Punktmelder ausgebildeten Gefahrenmelder, insbesondere einen Brandmelder, Rauchmelder oder Rauchgasmelder, welcher ein Meldergehäuse mit einer Melderhaube, einen für Wärmestrahlung im Infrarotbereich empfindlichen, kontaktlos arbeitenden Wärmestrahlungssensor sowie eine nachgeschaltete Verarbeitungseinheit aufweist. Mit Infrarotbereich ist hier insbesondere der Längenwellenbereich von 2 µm bis 50 µm gemeint, der auch als mittleres Infrarot, abgekürzt als MIR, bezeichnet wird.

Die Verarbeitungseinheit ist zumindest zur Weiterverarbeitung eines vom Wärmestrahlungssensor ausgegebenen Sensorsignals eingerichtet. Der Wärmestrahlungssensor weist vorzugsweise eine Thermosäule oder ein Bolometer auf. Geläufiger ist in der Fachsprache jedoch der englischsprachige Fachbegriff "Thermopile" für eine Thermosäule. Sowohl die Thermosäule als auch das Bolometer weisen typischerweise jeweils eine (einzige) für Wärmestrahlung empfindliche Sensorschicht auf. Sie sind insbesondere nicht-bildgebend, d.h. sie weisen keine Matrix aus einer Vielzahl von wärmestrahlungsempfindlichen "Pixeln" auf, wie z.B. eine Matrix aus 16 mal 16, oder 32 mal 32 "Pixeln". In diesem Sinne weisen die betrachteten Wärmestrahlungssensoren lediglich ein einziges "Pixel" auf.

Die Erfindung betrifft weiterhin zwei Verfahren zur Ermittlung eines Temperaturwertes in der Umgebung eines als Punktmelder ausgebildeten Gefahrenmelders.

Die betrachteten, als Punktmelder ausgebildeten Gefahrenmelder sind zur Erfassung einer Umgebungstemperatur vorgesehen, um z.B. die bei einem Brand oder Feuer entstehende Hitze zu detektieren. Zusätzlich können die Gefahrenmelder als Brandmelder, Rauchmelder oder Rauchgasmelder ausgebildet sein.

Im Falle eines optischen Rauchmelders können diese eine oder mehrere im oder am Meldergehäuse angeordnete Streulichtanordnungen zur Detektion von Rauchpartikeln aufweisen. Der optische Rauchmelder kann dabei als offener Rauchmelder ausgebildet sein, bei dem der Detektionsraum ausserhalb des Meldergehäuses liegt. Er kann auch eine im Meldergehäuse angeordnete geschlossene Messkammer für die Rauchdetektion aufweisen. Eine derartige optische Messkammer wird auch als Labyrinth bezeichnet, welche einerseits durch optische Blenden gegen Fremdlicht abgeschirmt ist, jedoch andererseits für zu detektierende Rauchpartikel durchgängig ist. Hierzu weist das Meldergehäuse zumindest eine Eintrittsöffnung für den möglichen Eintritt von Rauchpartikeln in die optische Messkammer auf.

Es kann im Gefahrenmelder alterativ oder zusätzlich ein Gassensor zur Detektion von Brandrauchgasen wie CO oder NOₓ aufgenommen sein. Dazu ist im Gehäuse zumindest eine Eintrittsöffnung für die zu detektierenden Brandrauchgase angeordnet. Alterativ oder zusätzlich kann der Gefahrenmelder eine nach dem optischen Extinktionsverfahren und/oder eine nach dem akustooptischen Prinzip arbeitende Detektoreinheit aufweisen.

Durch Berücksichtigung unterschiedlicher Brandkenngrössen, wie z.B. der Umgebungstemperatur zusammen mit einem brandtypischen Gaskonzentrationswert und/oder mit einem optisch erfassten Rauchpartikelkonzentrationswert, sind durch die Verarbeitungseinheit genauere Analysen und Plausibilitätsprüfungen möglich. Die Ausgabe von Fehlalarmen wird mittels einer solchen Multikriterienauswertung deutlich reduziert.

Die betrachteten Gefahrenmelder können über eine gemeinsame Melderleitung, insbesondere über eine Zweidrahtleitung, signal- und/oder datentechnisch mit einer Gefahrenmeldezentrale bzw. mit einer Brandmeldezentrale verbunden sein. Es können mehrere derartiger Gefahrenmelder in Meldergruppen oder Melderlinien an eine solche Gefahrenmeldezentrale angeschlossen sein, über die typischerweise auch die elektrische Versorgung der Gefahrenmelder mit Strom erfolgt. Alternativ oder zusätzlich können die Gefahrenmelder "drahtlos" ausgeführt sein. In diesem Fall kommunizieren diese vorzugweise über Funk mit der Gefahrenmeldezentrale oder mit weiteren Gefahrenmeldern.

Bei bekannten Gefahrenmeldern ist der Temperatursensor, typischerweise ein NTC-Widerstand, vorzugsweise am Melderscheitel angebracht, um die Umgebungstemperatur des Gefahrenmelders möglichst richtungsunabhängig zu erfassen.

Ein gravierendes Problem dabei ist, dass die Umgebungstemperatur mittels des NTC-Widerstands nur punktförmig erfasst wird. Dies erfordert eine sehr genaue mechanische Positionierung. Untersuchungen dazu haben gezeigt, dass bereits Abweichungen von weniger als 1mm vom Scheitelpunkt, das heisst von der geometrischen zentralen Position, zu signifikanten Richtungsabhängigkeiten führen können. Darüber hinaus ist es nachteilig erforderlich, dass der NTC-Widerstand mechanisch gegenüber der Umgebung geschützt werden muss, wie z.B. mittels eines separaten Doms oder einer Haube.

Ein weiteres Problem ist, dass die elektrische Verbindung des NTC-Widerstands zu einer entsprechenden Auswerteeinheit, die sich auf einem Schaltungsträger des Gefahrenmelders befindet, durch eine Verbindungsleitung erfolgt, die zumeist durch den optisch sensiblen Innenraum des Meldergehäuses und durch die darin befindliche Messkammer für die Rauchdetektion zur Auswerteeinheit führt. Dies führt zu aufwändigen Konstruktionen hinsichtlich der Messkammer und erschwert die Montage des Gefahrenmelders. Darüber hinaus sind nachteilig optische Streuungen an der Durchführung der Verbindungsleitung möglich.

Bekannt ist auch, zwei oder mehrere, vorzugsweise sich gegenüberliegende Temperatursensoren am Aussenumfang des Gefahrenmelders anzuordnen. Allerdings sind nachteilig zusätzliche Bauteile erforderlich. Zudem ist der zusätzliche Aufwand für die Montage und für die elektronische Messauswertung immens.

Die europäische Patentanmeldung EP0419046A1 wurde am 21. August 1990 eingereicht und am 27. März 1991 veröffentlicht. EP0419046A1 offenbart ein Feueralarmsystem, ein Verfahren dazu und einen Umgebungsmonitor. Die Patentanmeldung WO86/00179A1 wurde am 7. Juni 1985 eingereicht und am 3. Januar 1986 veröffentlicht. WO86/00179A1 lehrt einen Alarm im Falle von Überhitzen. Die Patentanmeldung US2003/222218A1 wurde am 30. Mai 2003 eingereicht und am 4. Dezember 2003 veröffentlicht. US2003/222218A1 lehrt einen Infrarotsensor sowie ein elektronisches Gerät, welches diesen nutzt. Die Patentanmeldung WO2005/121727A1 wurde am 8. Juni 2005 eingereicht und am 22. Dezember 2005 veröffentlicht. WO2005/121727A1 offenbart einen Sensor.

Ausgehend von dem eingangs genannten Stand der Technik ist es eine Aufgabe der Erfindung, einen Gefahrenmelder mit einer einfacheren Temperaturerfassung anzugeben.

Es ist eine weitere Aufgabe der Erfindung, zwei korrespondierende Verfahren für die Ermittlung der Umgebungstemperatur in der Umgebung eines Gefahrenmelders anzugeben.

Diese Aufgaben werden durch die Gegenstände der unabhängigen Patentansprüche gelöst. Vorteilhafte Ausführungsformen der Erfindung sind in den abhängigen Ansprüchen beschrieben.

Gemäss der Erfindung weist ein als Punktmelder ausgebildeter Gefahrenmelder ein Meldergehäuse mit einer Melderhaube, einen für Wärmestrahlung im Infrarotbereich empfindlichen, kontaktlos arbeitenden Wärmestrahlungssensor sowie eine Verarbeitungseinheit zumindest zur Ermittlung und Ausgabe eines aus der detektierten Wärmestrahlung abgeleiteten Temperaturwertes für eine Umgebungstemperatur in der Umgebung des Gefahrenmelders und/oder einer Meldung, falls der aktuell ermittelte Temperaturwert einen vorgegebenen Temperaturvergleichswert überschreitet auf. Der Wärmestrahlungssensor ist im Meldergehäuse angeordnet und zur Erfassung der Umgebungstemperatur optisch auf die Innenseite der Melderhaube ausgerichtet.

Der Kern der Erfindung liegt in der Erkenntnis, dass sich die Melderhaube bei bestimmungsgemässer Deckenmontage üblicherweise am schnellsten erwärmt, wie z.B. bei einem Brand, und dass diese im Vergleich zu einem NTC-Widerstand grosse "Sensorfläche" zur Temperaturermittlung von der geschützten Innenseite der Melderhaube her herangezogen werden kann.

Durch die kontaktlose Erfassung der von der Innenseite der Melderhaube abgestrahlten Wärmestrahlung mittels eines Wärmestrahlungssensors entfällt vorteilhaft eine aufwändige und EMV-anfällige elektrische Verdrahtung hin zu einer Verarbeitungseinheit für die Erfassung und Auswertung der Temperatur. Üblicherweise ist eine solche Verarbeitungseinheit auf einem Schaltungsträger im Gefahrenmelder angeordnet.

Die obengenannte Meldung kann z.B. eine Alarmmeldung sein, wenn ein Temperaturwert von z.B. 65°C überschritten wird. Die Meldung kann dann kabelgebunden oder über Funk an eine Gefahrenmeldezentrale oder auch optisch und/oder akustisch direkt am Gefahrenmelder ausgegeben werden.

Besonders vorteilhaft ist es, wenn der Wärmestrahlungssensor als SMD-Bauteil auf diesem Schaltungsträger angeordnet ist. Im Vergleich zu einer hierzu erforderlichen manuellen Montage des NTC-Widerstands entfällt diese hier. Zudem ist eine automatisierte SMD-Montage deutlich günstiger und exakter.

Das Meldergehäuse sowie die Melderhaube, die auch als Melderdeckel oder als Melderabdeckung bezeichnet werden können, sind, wie bei herkömmlichen Brandmeldern auch, lichtdicht ausgeführt. Sie bestehen aus einem lichtundurchlässigen Werkstoff, wie z.B. aus weissem Kunststoff. Meldergehäuse und Melderhaube bilden dabei typischerweise ein Bauteil, insbesondere ein einstückiges Kunststoffspritzgussteil. Gemäß der Erfindung ist die Innenseite der Melderhaube als Messoberfläche zur kontaktlosen Erfassung der Wärmestrahlung nutzbar. Die Messoberfläche liegt optisch in einem Erfassungsbereich des Wärmestrahlungssensors. Dadurch ist im Vergleich zu einer mehr punktuellen Temperaturerfassung bei einem NTC-Widerstand eine grössere Fläche erfassbar. Im Vergleich zur Montage mit einem NTC-Widerstand sind Montage- und Bauteiltoleranzen weitaus weniger kritisch.

Nach einer besonders vorteilhaften Ausführungsform ist die Messoberfläche an einer zentralen Position, insbesondere mittig an der Innenseite der Melderhaube zur weitgehend richtungsunabhängigen Erfassung der Umgebungstemperatur vorgesehen. Die Messoberfläche liegt sozusagen auf der gegenüberliegenden Seite des Melderscheitels. Da sich die Melderhaube aus jeder Richtung ähnlich schnell erwärmt, ist durch die zentrale Anordnung eine deutlich kleinere Richtungsabhängigkeit im thermischen Ansprechverhalten erzielbar.

Einer weiteren Ausführungsform zufolge weist die Innenseite der Melderhaube zumindest in etwa im Bereich der nutzbaren Messoberfläche einen behandelten oder unbehandelten Werkstoff mit einer vorgegebenen Oberflächenbeschaffenheit auf. Alternativ oder zusätzlich kann die Innenseite eine Beschichtung mit einem Emissionsgrad für die Wärmeabstrahlung im Infrarotbereich der Messoberfläche von zumindest 0.75, vorzugsweise von zumindest 0.9 aufweisen.

Durch die dadurch bedingte höhere Wärmeabstrahlung ist bei gleicher Temperatur eine bessere Messauswertung mit höherer Genauigkeit möglich. Mit "behandelt" ist hier gemeint, dass die Oberfläche des verwendeten Werkstoffs z.B. poliert oder aufgeraut ist. Die Beschichtung ist vorzugsweise eine schwarze zumindest im Bereich der Messoberfläche aufgebrachte Farbschicht. Die Beschichtung kann auch ein schwarzer Aufkleber oder ein schwarzer Klebepunkt sein, der zumindest die geometrischen Abmessungen der Messoberfläche aufweist.

Nach einer Ausführungsform ist die Verarbeitungseinheit zur rechnerischen Ermittlung und Ableitung des Temperaturwertes aus einem von dem Wärmestrahlungssensor ausgegebenen Sensorsignal und aus einem gespeicherten Wert für den Emissionsgrad der Messoberfläche eingerichtet. Der hierzu erforderliche Rechenaufwand kann vorteilhaft von einer sowie zur Steuerung und Auswertung des Gefahrenmelders vorgesehenen Verarbeitungseinheit mit übernommen werden.

Die rechnerische Ermittlung des Temperaturwertes ist allgemein nach dem pyrometrischen Messprinzip bekannt. Der hierzu erforderliche Emissionsgrad kann z.B. im Rahmen einer Musterprüfung messtechnisch ermittelt werden. Der ermittelte Wert kann dann in der Verarbeitungseinheit elektronisch gespeichert sein oder aus einem damit verbundenen nichtflüchtigen Halbleiterspeicher geladen werden. Die Verarbeitungseinheit ist vorzugsweise ein Mikrocontroller. Ein solcher Mikrocontroller weist dann die für eine rechnerische Ermittlung und Ableitung des Temperaturwertes aus einem aktuellen Wert des Sensorsignals und aus dem gespeicherten Emissionswert notwendigen Rechenschritte auf. Der Mikrocontroller kann auch einen A/D-Umsetzer zur Umsetzung des vom Wärmestrahlungssensor ausgegebenen Sensorsignals in einen entsprechenden Digitalwert aufweisen. Vorzugsweise ist der Mikrocontroller dazu eingerichtet, einen Grossteil oder sämtliche Steuerung- und Auswerteaufgaben des Gefahrenmelders bis hin zur Alarmausgabe zu übernehmen.

Einer dazu alternativen Ausführungsform zufolge weist der Gefahrenmelder zwei für Wärmestrahlung im Infrarotbereich empfindliche, kontaktlos arbeitende Wärmestrahlungssensoren sowie die Verarbeitungseinheit auf. Die beiden Wärmestrahlungssensoren weisen unterschiedliche spektrale Wärmestrahlungsempfindlichkeiten auf. Die Verarbeitungseinheit ist in diesem Fall zur Ermittlung des Temperaturwertes auf Basis einer Verhältnispyrometrie eingerichtet. Es ist dann aus dem Verhältnis zweier erfasster Sensorsignalwerte der Temperaturwert eindeutig ermittelbar. Durch die Auswertung des Verhältnisses zweier Sensorsignale für zwei unterschiedliche Wellenlängenbereiche ist die Berücksichtigung des Emissionsgrades der Messoberfläche nicht erforderlich. Der Mikrocontroller kann in diesem Fall z.B. zwei A/D-Umsetzer zur Umsetzung der beiden von den Wärmestrahlungssensoren ausgegebenen Sensorsignale in einen jeweils entsprechenden Digitalwert aufweisen.

Es kann alternativ dazu der Gefahrenmelder auch (nur) einen für Wärmestrahlung im Infrarotbereich empfindlichen, kontaktlos arbeitenden Wärmestrahlungssensor sowie die Verarbeitungseinheit aufweisen. Dem Wärmestrahlungssensor ist ein umschaltbares optisches Filter für zwei unterschiedliche spektrale Wärmestrahlungsempfindlichkeiten vorgeschaltet. Die Verarbeitungseinheit ist zur Ermittlung des Temperaturwertes auf Basis einer Verhältnispyrometrie eingerichtet. Das optische Filter kann ein elektrisch ansteuerbares optisches Filter sein. Die elektrische Ansteuerung zum Umschalten der spektralen Wärmestrahlungsempfindlichkeit und die dazu entsprechende Auswertung des Sensorsignals erfolgt vorzugsweise durch die Verarbeitungseinheit.

Besonders vorteilhaft ist es, wenn der oder die Wärmestrahlungssensoren und die Verarbeitungseinheit in einem Bauteil als kontaktlos arbeitender Temperatursensor zusammengefasst sind. Dadurch verringert sich vorteilhaft der Entwicklungs-, Bauteil- und Montageaufwand.

Nach einer vorteilhaften Ausführungsform ist ein in etwa der Messoberfläche flächenmässig entsprechendes Melderhaubenteil gegenüber einem Restteil der Melderhaube in seiner Dicke reduziert. Dadurch reduziert sich die thermische Wärmekapazität im Bereich der Messoberfläche. Thermische Änderungen sind vorteilhaft schneller detektierbar. Alternativ oder zusätzlich kann das Melderhaubenteil weitgehend thermisch vom Restteil entkoppelt sein, wie z.B. über verbleibende Stege zwischen dem Melderhaubenteil und dem Restteil mit dazwischenliegenden Schlitzöffnungen. Letztere können vorteilhaft als Eintrittsöffnungen für eine innenliegende optische Messkammer und/oder für einen innenliegenden Gassensor für Brandrauchgase verwendet werden. Durch die thermische Entkopplung wird ein sonst ausgleichender nachteiliger Wärmefluss von Melderhaubenteil zum Restteil und umgekehrt weitgehend unterbunden. Mit "weitgehend" ist ein Wert für die thermische Entkopplung im Bereich von mindestens 80% gemeint.

Einer weiteren Ausführungsform nach weist der jeweilige Wärmestrahlungssensor eine wärmestrahlungsempfindliche Sensorfläche auf. Es ist zwischen der oder beiden Sensorflächen einerseits und der für die Erfassung der Umgebungstemperatur vorgesehenen Innenseite der Melderhaube andererseits eine optische Linse angeordnet, wobei die Linse für Licht im mittleren Infrarotbereich transparent ist. Dadurch ist eine Messoberfläche mit vorgegebenen geometrischen Abmessungen, wie z.B. mit einem Durchmesser von 2cm oder einer Kantenlänge von in etwa 2cm x 2cm in etwa auf die Sensorfläche des Wärmestrahlungssensors fokussierbar. In diesem Fall ist der Wärmestrahlungssensor auf dem Schaltungsträger der Messoberfläche bzw. dem Melderhaubenteil gegenüberliegend angeordnet, vorzugsweise an zentraler mittiger Position des Gefahrenmelders. Im Falle von zwei Wärmestrahlungssensoren sind diese bevorzugt benachbart angeordnet.

Alternativ oder zusätzlich ist zwischen der oder beiden Sensorflächen einerseits und der für die Erfassung der Umgebungstemperatur vorgesehenen Innenseite der Melderhaube andererseits ein Lichtleiter angeordnet. Der Lichtwellenleiter ist für Licht im mittleren Infrarotbereich transparent. In diesem Fall kann der Wärmestrahlungssensor bzw. können beide Wärmestrahlungssensoren z.B. an einem Aussenrand auf dem Schaltungsträger oder in einem unkritischen Bereich im Falle einer vorhandenen optischen Messkammer für Rauchpartikel angeordnet sein. Dagegen kann die Messoberfläche weiterhin an zentraler Position an der Innenseite der Melderhaube verbleiben. Auch in diesem Fall liegen sich der bzw. die Wärmestrahlungssensoren und die Innenseite der Melderhaube an der zentralen Position optisch gegenüber. Denn die von der Messoberfläche in den Lichtwellenleiter eingekoppelte Wärmestrahlung verläuft über mehrere Totalreflexionen im Lichtleiter zur Auskopplung auf die jeweilige Sensorfläche des Wärmestrahlungssensors. Dadurch kann vorteilhaft der Innenraum des Meldergehäuses frei gehalten, wie z.B. zur Aufnahme einer optischen Messkammer. Optisch störende Komponenten, wie z.B. durch die Messkammer geführte Verbindungsleitungen, können vorteilhaft entfallen. Zudem vereinfacht sich die Montage erheblich.

Ein derartiger Werkstoff für die optische Linse und für den Lichtleiter kann z.B. ein Kunststoff, wie z.B. ein thermoplastischer Kunststoff auf Basis von Polymethylmethacrylat oder Polycarbonat, ein Glas, wie z.B. Quarzglas, oder eine Keramik sein, wie z.B. transparente feinkristalline Spinell-Keramiken auf Basis von Magnesium- und Aluminiumoxid. Der Erfindung zufolge weist der jeweilige Wärmestrahlungssensor eine Thermosäule oder ein Bolometer auf. Gegenüber einem auf dem pyroelektrischen Effekt basierenden Sensor, der physikalisch bedingt nur in der Lage ist, dynamische Änderungen eines warmen Objekts zu erfassen, sind Thermosäulen sowie Bolometer in der Lage, statische wie auch dynamische Wärmeunterschiede zu erfassen.

Ein Beispiel für eine als SMD-Bauelement erhältliche Thermosäule ist z.B. der "Infrared Thermopile Sensor TMP006" von Texas Instrument mit Gehäuseabmessungen von 1.6 mm x 1.6 mm. Dieses Bauelement verfügt zudem über eine digitale Datenschnittstelle für die Ausgabe eines bereits digitalen Sensorsignals zur möglichen Weiterverarbeitung durch einen Mikrocontroller oder Mikroprozessor. Im zugehörigen "User's Guide" mit Ausgabestand Mai 2011 sind mathematische Gleichungen angegeben, um aus einem gegebenen Emissionsgrad, aus einer dem Sensorsignal entsprechenden Sensorspannung und weiteren Parametern wie Chiptemperatur und Kalibrierungsfaktor einen Temperaturwert rechnerisch zu ermitteln. Die rechnerische Lösung dieser Gleichungen kann mittels geeigneter Softwareroutinen dann auf einem nachgeschalteten Mikrocontroller erfolgen. Einer weiteren Ausführungsform zufolge ist im Gefahrenmelder ein Gassensor für Brandrauchgase aufgenommen. Es ist im Meldergehäuse zumindest eine Eintrittsöffnung für die zu detektierenden Brandrauchgase angeordnet. Alternativ oder zusätzlich kann im Gefahrenmelder eine im oder am Meldergehäuse angeordneten Streulichtanordnung zur Detektion von Rauchpartikeln angeordnet sein. Dadurch stehen weitere Brandkenngrössen für eine zuverlässigere Gefahrenauswertung zur Verfügung. Diese können in geeigneter Weise zu einem Algorithmus im Sinne einer Multikriterienauswertung verknüpft werden. Weiterhin wird die Aufgabe der Erfindung allgemein durch ein Verfahren zur Ermittlung eines Temperaturwertes in der Umgebung eines als Punktmelder ausgebildeten Gefahrenmelders gelöst, wobei eine von einer Innenseite einer Melderhaube abgegebene Wärmestrahlung kontaktlos mittels eines dafür empfindlichen Wärmestrahlungssensors, insbesondere mittels einer Thermosäule oder eines Bolometers, als Sensorsignal erfasst wird. Der Temperaturwert für die Umgebung des Gefahrenmelders wird dabei aus dem Sensorsignal auf pyrometrischem Wege rechnerisch ermittelt und ausgegeben.

Insbesondere wird der Temperaturwert aus dem Sensorsignal unter Berücksichtigung eines vom Werkstoff und/oder eines von der Oberflächenbeschaffenheit der Innenseite der Melderhaube abhängigen Emissionsgrades für die Wärmeabstrahlung ermittelt und ausgegeben.

Alternativ dazu kann die Wärmestrahlung kontaktlos mittels zweier dafür empfindlicher Wärmestrahlungssensoren jeweils als Sensorsignal erfasst werden, wobei die beiden Wärmestrahlungssensoren unterschiedliche spektrale Wärmestrahlungsempfindlichkeiten aufweisen. Es wird in diesem Fall der Temperaturwert für die Umgebung des Gefahrenmelders aus den beiden Sensorsignalen auf Basis einer Verhältnispyrometrie ermittelt und ausgegeben. In diesem Fall entfällt die vergleichsweise aufwändige rechnerische Ermittlung des Temperaturwertes auf Basis des Emissionsgrades.

Alternativ dazu kann die Wärmestrahlung kontaktlos mittels (nur) eines dafür empfindlichen Wärmestrahlungssensors als Sensorsignal erfasst werden, wobei dem Wärmestrahlungssensor ein umschaltbares optisches Filter für zwei unterschiedliche spektrale Wärmestrahlungsempfindlichkeiten vorgeschaltet wird. Es wird dann der Temperaturwert für die Umgebung des Gefahrenmelders aus dem Sensorsignal entsprechend der jeweils aktuell eingestellten spektralen Wärmestrahlungsempfindlichkeit auf Basis einer Verhältnispyrometrie ermittelt und ausgegeben. Die Umschaltung erfolgt vorzugsweise zyklisch.

Die Erfindung sowie vorteilhafte Ausführungen der vorliegenden Erfindung werden am Beispiel der nachfolgenden Figuren erläutert. Dabei zeigen:
- FIG 1: ein Beispiel eines als Punktmelder ausgebildeten Gefahrenmelders gemäss der Erfindung,
- FIG 2: ein Beispiel eines Gefahrenmelders nach einer ersten Ausführungsform,
- FIG 3: ein Beispiel eines Gefahrenmelders nach einer zweiten Ausführungsform,
- FIG 4: eine Draufsicht auf den beispielhaften Gefahrenmelder gemäss FIG 3,
- FIG 5: ein Messprinzip der erfindungsgemässen Ermittlung eines Temperaturwertes in der Umgebung eines als Punktmelder ausgebildeten Gefahrenmelders, und
- FIG 6: ein Beispiel für einen als optischen Rauchmelder ausgebildeten Gefahrenmelder mit innenliegender optischer Messkammer und mit einem Lichtleiter gemäss der Erfindung.

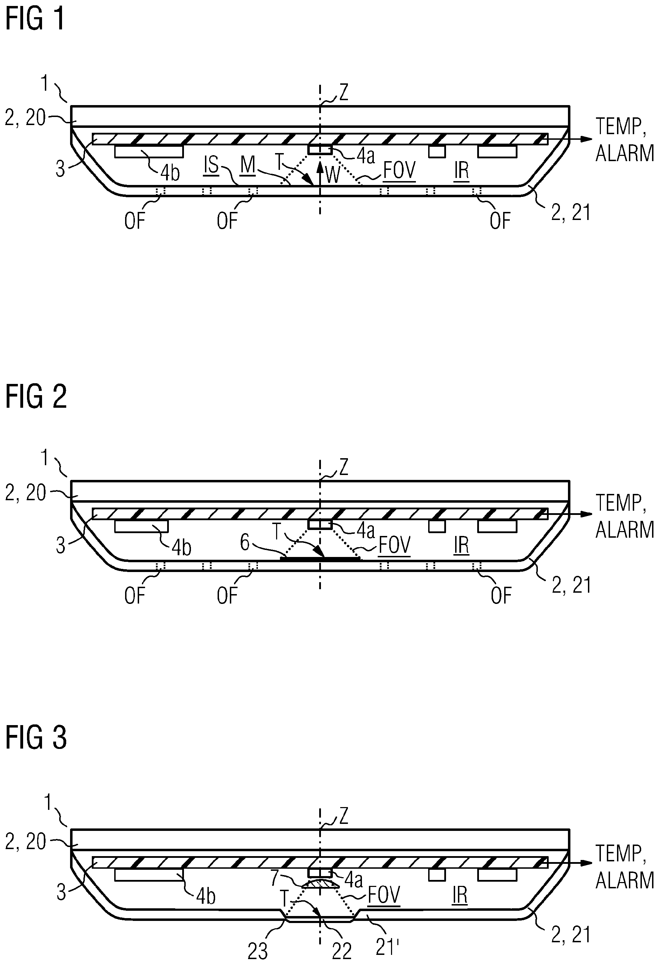

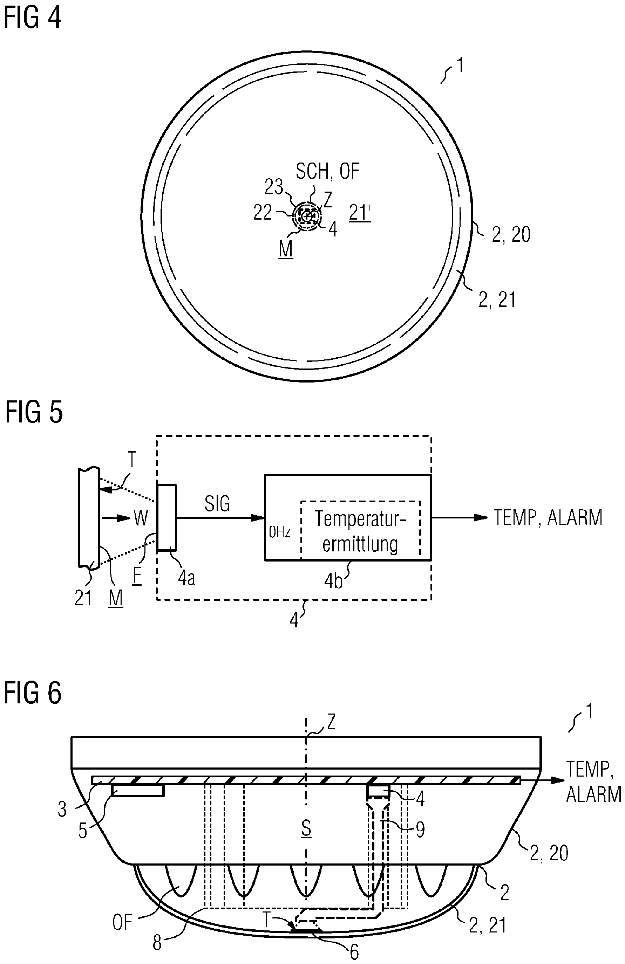

FIG 1 zeigt ein Beispiel eines als Punktmelder ausgebildeten Gefahrenmelders 1 gemäss der Erfindung. Mit dem Bezugszeichen 2 ist ein Meldergehäuse bezeichnet, welches unter anderem eine mit 21 bezeichnete Melderhaube aufweist. Die Melderhaube 21 kann auch als Melderdeckel, Abdeckung oder Melderkappe bezeichnet werden. Eingezeichnet ist weiterhin eine Symmetrieachse des typischerweise rotationssymmetrisch ausgeführten Meldergehäuses 2 (siehe dazu FIG 4), die somit einen zentralen Bereich Z für den Gefahrenmelder 1 darstellt. Mit IS ist zudem die Innenseite der Melderhaube 21 bezeichnet. In der Melderhaube 21 können, wie gestrichelt eingezeichnet, auch Eintrittsöffnungen OF vorhanden sein, um z.B. den Eintritt von Rauchgasen in das Gehäuseinnere IR sowie deren Detektion mittels eines dort vorhandenen, nicht weiter dargestellten Gassensors zu ermöglichen. Mit dem Bezugszeichen 20 ist ein Meldersockel zur lösbaren Aufnahme des Gefahrenmelders 1 vorzugsweise an einer Decke bezeichnet. Im Gefahrenmelder 1 ist ein Schaltungsträger 3, wie z.B. eine Leiterplatte, aufgenommen. Auf diesem Schaltungsträger 3 sind typischerweise eine Mehrzahl von Bauelementen, wie Widerstände, Kondensatoren sowie Halbleiterbauelemente angeordnet. Aus Gründen der Übersichtlichkeit wurde auf eine detaillierte zeichnerische Darstellung verzichtet.

Dargestellt sind jedoch ein mit dem Bezugszeichen 4a bezeichneter, für Wärmestrahlung W im Infrarotbereich empfindlicher, kontaktlos arbeitender Wärmestrahlungssensor 4a sowie eine nachgeschaltete Verarbeitungseinheit 4b gemäss der Erfindung. Letztere ist zumindest zur Ermittlung und Ausgabe eines aus der detektierten Wärmestrahlung W abgeleiteten Temperaturwertes TEMP für eine Umgebungstemperatur T in der Umgebung des Gefahrenmelders 1 vorgesehen bzw. eingerichtet. Die Verarbeitungseinheit 4b kann gemäss der Erfindung alternativ oder zusätzlich, wie im vorliegenden Beispiel durch einen Pfeil angedeutet, auch zur Ausgabe einer Meldung ALARM eingerichtet sein, falls der aktuell ermittelte Temperaturwert TEMP einen vorgegebenen Temperaturvergleichswert überschreitet. Weiterhin gemäss der Erfindung weist der Wärmestrahlungssensor 4a eine als SMD-Bauteil ausgeführte Thermosäule auf. Sie ist vorzugsweise für Infrarotlicht im Wellenlängenbereich von 2 µm bis 50 µm, insbesondere von 3 µm bis 20 µm, empfindlich.

Der im Meldergehäuse 2 angeordnete Wärmestrahlungssensor 4a ist zudem gemäss der Erfindung optisch auf die Innenseite IS der Melderhaube 21 zur Erfassung der Umgebungstemperatur T ausgerichtet. Dabei folgt die Temperatur T an der Innenseite IS der Melderhaube 21 mit geringer, vertretbarer Verzögerung der tatsächlichen Temperatur vor allem im strömungsrelevanten zentralen Bereich Z an der Aussenseite der Melderhaube 21. Weiterhin gemäss der Erfindung ist die Innenseite IS der Melderhaube 21 als Messoberfläche M zur kontaktlosen Erfassung der Wärmestrahlung W nutzbar. Die Messoberfläche M liegt dabei optisch in einem Erfassungsbereich FOV des Wärmestrahlungssensors 4a. Insbesondere ist die gezeigte Messoberfläche M an einer zentralen Position Z, d.h. mittig an der Innenseite IS der Melderhaube 21 zur weitgehend richtungsunabhängigen Erfassung der Umgebungstemperatur T vorgesehen. Gemäss der Erfindung ist die Verarbeitungseinheit 4b zur rechnerischen Ermittlung und Ableitung des Temperaturwertes TEMP aus einem vom Wärmestrahlungssensor 4a ausgegebenen Sensorsignal und aus einem gespeicherten Wert für den Emissionsgrad der Messoberfläche M eingerichtet. Der Emissionsgrad ist dabei von der Oberflächenbeschaffenheit sowie vom Werkstoff im Bereich der Messoberfläche M abhängig.

FIG 2 zeigt ein Beispiel eines Gefahrenmelders 1 nach einer ersten Ausführungsform. In diesem Fall weist die Innenseite IS der Melderhaube 21 zumindest in etwa im Bereich der nutzbaren Messoberfläche M eine Beschichtung 6 mit einem Emissionsgrad für die Wärmeabstrahlung im Infrarotbereich der Messoberfläche M von zumindest 0.75, vorzugsweise von zumindest 0.9 auf. In diesem Bereich kann auch eine Farbe, wie z.B. das Velvet Superblack Paint von der Fa. 3M, aufgebracht werden, welches faktisch einen Emissionsgrad von 1.0 aufweist.

Alternativ dazu kann der Gefahrenmelder 1 gemäss der Erfindung auch zwei für Wärmestrahlung W im Infrarotbereich empfindliche, kontaktlos arbeitende Wärmestrahlungssensoren 4a sowie die Verarbeitungseinheit 4b aufweisen, wobei die beiden Wärmestrahlungssensoren 4a unterschiedliche spektrale Wärmestrahlungsempfindlichkeiten aufweisen. Der erste Wärmestrahlungssensor 4a kann z.B. in einem Bereich von 4 µm bis 5 µm, und der zweite in einem Bereich von 5.5 µm bis 6.5 µm empfindlich sein. Den beiden Wärmestrahlungssensoren 4a können auch identisch ausgeführt sein, wobei jedem ein optisches Filter vorgeschaltet ist. Die optischen Filter können z.B. bei 4 µm und 5.5 µm mit jeweils einer Bandbreite von 0.1 µm um diese Filterfrequenzen empfindlich sein. Die Verarbeitungseinheit 4b ist in diesem Fall zur Ermittlung des Temperaturwertes TEMP auf Basis einer Verhältnispyrometrie eingerichtet. Mit anderen Worten wird rechnerisch der Quotient aus beiden Sensorsignalen ermittelt, der dann einem Temperaturwert TEMP zugeordnet werden kann.

FIG 3 zeigt ein Beispiel eines Gefahrenmelders 1 nach einer zweiten Ausführungsform. In diesem Fall ist ein in etwa der Messoberfläche M flächenmässig entsprechendes Melderhaubenteil 22 gegenüber einem Restteil 21' der Melderhaube 22 in seiner Dicke reduziert, wie z.B. um ca. 60%. Zudem ist das Melderhaubenteil 22 über Stege 23 weitgehend thermisch vom Restteil 21' entkoppelt. Im folgenden Beispiel gemäss der FIG 4 ist die thermische Entkopplung deutlicher zu sehen.

Weiterhin gemäss der Erfindung weist der gezeigte Wärmestrahlungssensor 4a eine wärmestrahlungsempfindliche Sensorfläche F auf. Es ist zwischen der Sensorfläche F und der für die Erfassung der Umgebungstemperatur T vorgesehenen Innenseite IS der Melderhaube 21 eine optische Linse 7 vorgesehen. Diese dient vorteilhaft zur Fokussierung der vom Melderhaubenteil 22 ausgehenden Wärmestrahlung W auf die Sensorfläche F des Wärmestrahlungssensors 4a. Die optische Linse 7 ist dabei für Licht im mittleren Infrarotbereich transparent.

FIG 4 zeigt eine Draufsicht auf den beispielhaften Gefahrenmelder 1 gemäss FIG 3. Neben der rotationssymmetrischen Ausführung des Meldergehäuses 2 ist erkennbar, dass im zentralen Bereich Z, d.h. in der Gehäusemitte, das Melderhaubenteil 22 nur noch über acht Stege 23 mit dem Restteil 21' der Melderhaube 21 verbunden ist. Zwischen den Stegen 23 verbleiben Schlitze SCH, die zudem auch als Eintrittsöffnungen OF für Rauchgase oder Rauchpartikel dienen können. Durch die Stege 23 ist eine effektive thermische Entkopplung der Melderhaubenteils 22 vom Restteil 21' möglich.

FIG 5 zeigt ein Messprinzip der erfindungsgemässen Ermittlung eines Temperaturwertes TEMP in der Umgebung eines als Punktmelder ausgebildeten Gefahrenmelders. Gemäss dem erfindungsgemässen Verfahren wird eine von der Innenseite IS einer Melderhaube 21 abgegebene Wärmestrahlung W kontaktlos mittels eines dafür empfindlichen Wärmestrahlungssensors 4a als Sensorsignal SIG erfasst. Es wird dann der Temperaturwert TEMP für die Umgebung des Gefahrenmelders und/oder eine Meldung ALARM aus dem Sensorsignal SIG auf pyrometrischem Wege rechnerisch ermittelt und ausgegeben. Die Ermittlung und Ausgabe ist durch eine Verarbeitungseinheit 4b realisiert, die zusammen mit dem Wärmestrahlungssensor 4a auch zu einem gemeinsamen Bauteil 4 zusammengefasst sein kann. Die Bezeichnung "0Hz" soll symbolisieren, dass hier der Gleichanteil im Sensorsignal SIG ausgewertet wird.

FIG 6 zeigt schliesslich ein Beispiel für einen als optischen Rauchmelder ausgebildeten Gefahrenmelder 1 mit innenliegender Messkammer 8 und mit einem Lichtleiter 9 gemäss der Erfindung. Im vorliegenden Beispiel sind der Wärmestrahlungssensor und die Verarbeitungseinheit zu einem Bauteil im Sinne eines Temperatursensors 4 zusammengefasst. Mit dem Bezugszeichen 5 ist eine übergeordnete Hauptverarbeitungseinheit bezeichnet. Erfindungsgemäss ist zwischen der Sensorfläche F des Temperatursensors 4 bzw. zwischen der Sensorfläche F des Wärmestrahlungssensors 4a als Teil des Temperatursensors 4, und der für die Erfassung der Umgebungstemperatur T vorgesehenen Innenseite IS der Melderhaube 21 ein Lichtleiter 9 angeordnet. Letzterer ist für Licht im mittleren Infrarotbereich transparent. Dadurch kann auf vorteilhafte Weise der optisch auf Streulicht hochsensible Innenbereich, insbesondere das Streulichtzentrum S, frei von störenden Leitungsdurchführungen gehalten werden. Der Lichtleiter 9 kann z.B. an das Messkammergehäuse geschnappt werden oder im Falle eines Kunststoffspritzgussteils an das Kammergehäuse angespritzt werden.

### Bezugszeichenliste

- 1: Gefahrenmelder, Brandmelder, Rauchmelder, Rauchgasmelder, Punktmelder
- 2: Meldergehäuse
- 3: Schaltungsträger, Leiterplatte
- 4: Temperatursensor
- 4a: Wärmestrahlungssensor, Thermosäule, Bolometer
- 4b: Verarbeitungseinheit, Mikrocontroller
- 5: weitere Verarbeitungseinheit, Hauptcontroller
- 6: Beschichtung, Klebefolie
- 7: optische Linse
- 8: optische Messkammer, Labyrinth
- 9: Lichtleiter
- 20: Meldersockel
- 21: Melderhaube, Deckel, Abdeckung, Kappe
- 21': Restteil
- 22: Melderhaubenteil
- 23: Stege

- ALARM: Meldung, Alarmmeldung
- F: Sensorfläche
- FOV: Erfassungsbereich
- IR: Innenraum, Gehäuseinneres
- IS: Innenseite
- M: Messoberfläche
- OF: Eintrittsöffnung
- S: Streulichtzentrum
- SCH: Schlitz
- SIG: Sensorsignal
- T: Umgebungstemperatur
- TEMP: Temperaturwert
- W: Wärmestrahlung
- Z: Zentrale Position, Hautsymmetrieachse

## Patentansprüche

1. Als Punktmelder ausgebildeter Gefahrenmelder, welcher ein Meldergehäuse (2) mit einer Melderhaube (21), einen für Wärmestrahlung (W) im Infrarotbereich empfindlichen, kontaktlos arbeitenden Wärmestrahlungssensor (4a) sowie eine Verarbeitungseinheit (4b) zumindest zur Ermittlung und Ausgabe eines aus der detektierten Wärmestrahlung (W) abgeleiteten Temperaturwertes (TEMP) für eine Umgebungstemperatur (T) an der Innenseite der Melderhaube (21) des Gefahrenmelders und/oder einer Meldung (ALARM), falls der aktuell ermittelte Temperaturwert (TEMP) einen vorgegebenen Temperaturvergleichswert überschreitet, wobei der Wärmestrahlungssensor (4a) eine Thermosäule oder ein Bolometer aufweist sowie im Meldergehäuse (2) angeordnet und zur Erfassung der Umgebungstemperatur (T) optisch auf die Innenseite (IS) der Melderhaube (21) ausgerichtet ist, wobei die Innenseite (IS) der Melderhaube (21) als Messoberfläche (M) zur kontaktlosen Erfassung der Wärmestrahlung (W) nutzbar ist und wobei die Messoberfläche (M) optisch in einem Erfassungsbereich (FOV) des Wärmestrahlungssensors (4a) liegt.

2. Gefahrenmelder nach Anspruch 1, wobei die Messoberfläche (M) an einer zentralen Position (Z), insbesondere mittig an der Innenseite (IS) der Melderhaube (21) zur weitgehend richtungsunabhängigen Erfassung der Umgebungstemperatur (T) vorgesehen ist.

3. Gefahrenmelder nach Anspruch 2, wobei die Innenseite (IS) der Melderhaube (21) zumindest in etwa im Bereich der nutzbaren Messoberfläche (M) einen behandelten oder unbehandelten Werkstoff mit einer vorgegebenen Oberflächenbeschaffenheit und/oder einen Werkstoff mit einer Beschichtung (6) mit einem Emissionsgrad für die Wärmeabstrahlung im Infrarotbereich der Messoberfläche (M) von zumindest 0.75, vorzugsweise von zumindest 0.9 aufweist.

4. Gefahrenmelder nach Anspruch 3, wobei die Verarbeitungseinheit (4b) zur rechnerischen Ermittlung und Ableitung des Temperaturwertes (TEMP) aus einem vom Wärmestrahlungssensor (4a) ausgegebenen Sensorsignal (SIG) und aus einem gespeicherten Wert für den Emissionsgrad der Messoberfläche (M) eingerichtet ist.

5. Gefahrenmelder nach einem der Ansprüche 1 bis 3, wobei der Gefahrenmelder zwei für Wärmestrahlung (W) im Infrarotbereich empfindliche, kontaktlos arbeitende Wärmestrahlungssensoren (4a) sowie die Verarbeitungseinheit (4b) aufweist, wobei die beiden Wärmestrahlungssensoren (4a) unterschiedliche spektrale Wärmestrahlungsempfindlichkeiten aufweisen und wobei die Verarbeitungseinheit (4b) zur Ermittlung des Temperaturwertes (TEMP) auf Basis einer Verhältnispyrometrie eingerichtet ist.

6. Gefahrenmelder nach einem der Ansprüche 1 bis 3, wobei der Gefahrenmelder einen für Wärmestrahlung (W) im Infrarotbereich empfindlichen, kontaktlos arbeitenden Wärmestrahlungssensor (4a) sowie die Verarbeitungseinheit (4b) aufweist, wobei dem Wärmestrahlungssensor (4a) ein umschaltbares optisches Filter für zwei unterschiedliche spektrale Wärmestrahlungsempfindlichkeiten vorgeschaltet ist, und wobei die Verarbeitungseinheit (4b) zur Ermittlung des Temperaturwertes (TEMP) auf Basis einer Verhältnispyrometrie eingerichtet ist.

7. Gefahrenmelder nach einem der vorherigen Ansprüche, wobei der oder die Wärmestrahlungssensoren (4a) und die Verarbeitungseinheit (4b) in einem Bauteil als kontaktlos arbeitender Temperatursensor (4) zusammengefasst sind.

8. Gefahrenmelder nach einem der Ansprüche 2 bis 7, wobei ein in etwa der Messoberfläche (M) flächenmässig entsprechendes Melderhaubenteil (22) gegenüber einem Restteil (21') der Melderhaube (22) in seiner Dicke reduziert ist und/oder weitgehend thermisch vom Restteil (21') entkoppelt ist.

9. Gefahrenmelder nach einem der vorherigen Ansprüche, wobei der jeweilige Wärmestrahlungssensor (4a) eine wärmestrahlungsempfindliche Sensorfläche (F) aufweist und wobei zwischen der oder beiden Sensorflächen (F) einerseits und der für die Erfassung der Umgebungstemperatur (T) vorgesehenen Innenseite (IS) der Melderhaube (21) andererseits eine optische Linse (7) und/oder ein Lichtleiter (9) angeordnet ist, wobei die Linse (7) und der Lichtleiter (9) für Licht im mittleren Infrarotbereich transparent sind.

10. Gefahrenmelder nach einem der vorherigen Ansprüche, wobei im Gefahrenmelder ein Gassensor für Brandrauchgase aufgenommen ist und wobei im Meldergehäuse (2) zumindest eine Eintrittsöffnung (OF) für die zu detektierenden Brandrauchgase angeordnet ist.

11. Gefahrenmelder nach einem der vorherigen Ansprüche, mit einer im oder am Meldergehäuse (2) angeordneten Streulichtanordnung zur Detektion von Rauchpartikeln.

12. Verfahren zur Ermittlung eines Temperaturwertes (TEMP) in der Umgebung eines als Punktmelder ausgebildeten Gefahrenmelders (1), wobei eine von einer Innenseite (IS) einer Melderhaube (21) abgegebene Wärmestrahlung (W) kontaktlos mittels eines dafür empfindlichen Wärmestrahlungssensors (4a), insbesondere mittels einer Thermosäule oder eines Bolometers, als Sensorsignal (SIG) erfasst wird und wobei der Temperaturwert (TEMP) für die Umgebung des Gefahrenmelders (1) aus dem Sensorsignal (SIG) unter Berücksichtigung eines vom Werkstoff und/oder von der Oberflächenbeschaffenheit der Innenseite (IS) der Melderhaube (21) abhängigen Emissionsgrades für die Wärmeabstrahlung rechnerisch ermittelt und ausgegeben wird.

13. Verfahren zur Ermittlung eines Temperaturwertes (TEMP) in der Umgebung eines als Punktmelder ausgebildeten Gefahrenmelders (1), wobei eine von einer Innenseite (IS) einer Melderhaube (21) abgegebene Wärmestrahlung (W) kontaktlos mittels zweier dafür empfindlicher Wärmestrahlungssensoren (4a), insbesondere mittels zweier Thermosäulen oder zweier Bolometer, jeweils als Sensorsignal (SIG) erfasst wird, wobei die beiden Wärmestrahlungssensoren (4a) unterschiedliche spektrale Wärmestrahlungsempfindlichkeiten aufweisen, und wobei der Temperaturwert (TEMP) für die Umgebung des Gefahrenmelders (1) aus den beiden Sensorsignalen (SIG) auf Basis einer Verhältnispyrometrie ermittelt und ausgegeben wird.

## Claims

1. Danger detector embodied as a point-type detector, comprising an alarm housing (2) with an alarm cover (21), a non-contact heat radiation sensor (4a) sensitive to heat radiation (W) in the infrared range, as well as a processing unit (4b) at least for establishing and outputting a temperature value (TEMP) for an ambient temperature (T) derived from the detected heat radiation (W) on the inner side of the alarm cover (21) of the danger detector and/or a message (ALARM) if the current established temperature value (TEMP) exceeds a predetermined temperature comparison value, wherein the heat radiation sensor (4a) comprises a thermopile or a bolometer and is disposed in the alarm housing (2) and is aligned optically, for acquisition of the ambient temperature (T), to the inner side (IS) of the alarm cover (21), wherein the inner side (IS) of the alarm cover (21) is able to be used as a measurement surface (M) for non-contact acquisition of the heat radiation (W) and wherein the measurement surface (M) lies optically in an acquisition area (FOV) of the heat radiation sensor (4a).

2. Danger detector according to claim 1, wherein the measurement surface (M) is provided at a central position (Z), especially in the middle on the inner side (IS) of the alarm cover (21) for largely direction-independent acquisition of the ambient temperature (T).

3. Danger detector according to claim 2, wherein the inner side (IS) of the alarm cover (21) at least approximately in the area of the usable measurement surface (M), has a treated or untreated material with a predetermined surface property and/or a material with a coating (6) with a degree of emission for the heat radiation in the infrared range of the measurement surface (M) of at least 0.75, preferably of at least 0.9.

4. Danger detector according to claim 3, wherein the processing unit (4b) is configured for computational establishment and derivation of the temperature value (TEMP) from a sensor signal (SIG) output by the heat radiation sensor (4a) and from a stored value for the degree of emission of the measurement surface (M).

5. Danger detector according to one of claims 1 to 3, wherein the danger detector has two non-contact heat radiation sensors (4a) sensitive for heat radiation (W) in the infrared range and also the processing unit (4b), wherein the two heat radiation sensors (4a) have different spectral heat radiation sensitivities and wherein the processing unit (4b) is configured for establishing the temperature value (TEMP) on the basis of a ratio pyrometry.

6. Danger detector according to one of claims 1 to 3, wherein the danger detector has one non-contact heat radiation sensor (4a) sensitive for heat radiation (W) in the infrared range as well as the processing unit (4b), wherein a switchable optical filter for two different spectral heat radiation sensitivities is connected upstream of the heat radiation sensor (4a), and wherein the processing unit (4b) is configured for establishing the temperature value (TEMP) on the basis of a ratio pyrometry.

7. Danger detector according to one of the preceding claims, wherein the heat radiation sensor or sensors (4a) and the processing unit (4b) are combined into one component as a non-contact temperature sensor (4).

8. Danger detector according to one of claims 2 to 7, wherein an alarm cover part (22) approximately corresponding in terms of surface to the measurement surface (M) is reduced in its thickness by comparison with a remaining part (21') of the alarm cover (22) and/or is largely thermally decoupled from the remaining part (21').

9. Danger detector according to one of the preceding claims, wherein the respective heat radiation sensor (4a) has a heat radiation-sensitive sensor surface (F) and wherein an optical lens (7) and/or an optical fibre (9) is disposed between the or both sensor surfaces (F) on the one side and the inner side (IS) of the alarm cover (21) provided for the detection of the ambient temperature (T) on the other side, and the lens (7) and the optical fibre (9) are transparent for light in the mid-infrared range.

10. Danger detector according to one of the preceding claims, wherein a gas sensor for fire flue gases is accommodated in the danger detector and wherein at least one entry opening (OF) for the fire flue gases to be detected is disposed in the alarm housing (2).

11. Danger detector according to one of the preceding claims, with a scattered light arrangement disposed in or on the alarm housing (2) for detection of smoke particles.

12. Method for establishing a temperature value (TEMP) in the environment of a danger detector (1) embodied as a point-type detector, wherein a heat radiation (W) emitted from an inner side (IS) of an alarm cover (21) is acquired as a sensor signal (SIG) in a non-contact manner by means of a heat radiation sensor (4a) sensitive for said radiation, especially by means of a thermopile or a bolometer and wherein the temperature value (TEMP) for the environment of the danger detector (1) is established and output computationally from the sensor signal (SIG), taking into account a degree of emission for the heat radiation dependent on the material and/or on the surface property of the inner side (IS) of the alarm cover (21).

13. Method for establishing a temperature value (TEMP) in the environment of a danger detector (1) embodied as a point-type detector, wherein a heat radiation (W) emitted by an inner side (IS) of an alarm cover (21) is acquired in a non-contact manner by means of two heat radiation sensors (4a) sensitive for said radiation, especially by means of two thermopiles or two bolometers, as sensor signals (SIG) in each case, wherein the two heat radiation sensors (4a) have different spectral heat radiation sensitivities and wherein the temperature value (TEMP) for the environment of the danger detector (1) is established and output from the two sensors signals (SIG) on the basis of a ratio pyrometry.

## Revendications

1. Avertisseur de danger conçu sous forme de détecteur ponctuel, qui comprend un boîtier (2) muni d'un capot (21), un capteur de rayonnement thermique fonctionnant sans contact (4a), sensible au rayonnement thermique (W) dans le domaine infrarouge, ainsi qu'une unité de traitement (4b) au moins pour déterminer et délivrer une valeur de température (TEMP) dérivée du rayonnement thermique (W) détecté, pour une température ambiante (T) au niveau de la face intérieure du capot (21) de l'avertisseur de danger et/ou d'un système d'alarme (ALARM), au cas où la valeur de température déterminée (TEMP) au moment présent dépasse une valeur de température de référence prédéfinie,
dans lequel le capteur de rayonnement thermique (4a) comprend une thermopile ou un bolomètre, est disposé dans le boîtier (2) et est conçu pour détecter de manière optique la température ambiante (T) sur la face intérieure (IS) du capot (21), la face intérieure (IS) du capot (21) étant conçue comme une surface de mesure pour détecter sans contact le rayonnement thermique (W) et la surface de mesure (M) étant située optiquement dans une zone de détection (FOV) du capteur de rayonnement thermique (4a).

2. Avertisseur de danger selon la revendication 1, dans lequel la surface de mesure (M) est disposée à une position centrale (Z), notamment au milieu de la face intérieure (IS) du capot (21), pour permettre une détection de la température ambiante (T) de manière sensiblement omnidirectionnelle.

3. Avertisseur de danger selon la revendication 2, dans lequel la face intérieure (IS) du capot (21) comprend au moins approximativement dans la zone de la surface de mesure (M) fonctionnelle un matériau traité ou non traité ayant un état de surface prédéterminé ou un matériau doté d'un revêtement (6) qui présente un coefficient d'émissivité pour le rayonnement thermique dans le domaine de l'infrarouge de la surface de mesure (M) d'au moins 0,75, de préférence d'au moins 0,9.

4. Avertisseur de danger selon la revendication 3, dans lequel l'unité de traitement (4b) est conçue pour déterminer par calcul et déduire la valeur de température (TEMP) à partir d'un signal de capteur (SIG) émis par le capteur de rayonnement thermique (4a) et d'une valeur enregistrée du coefficient d'émissivité de la surface de mesure (M).

5. Avertisseur de danger selon l'une quelconque des revendications 1 à 3, qui comprend deux capteurs de rayonnement thermique (4a) fonctionnant sans contact, sensibles au rayonnement thermique (W) dans le domaine infrarouge ainsi que ladite unité de traitement (4b), les deux capteurs de rayonnement thermique (4a) présentant des sensibilités spectrales au rayonnement thermique différentes et l'unité de traitement (4b) étant conçue pour déterminer la valeur de température (TEMP) sur la base d'une pyrométrie proportionnelle.

6. Avertisseur de danger selon l'une quelconque des revendications 1 à 3, qui comprend un capteur de rayonnement thermique (4a) fonctionnant sans contact, sensible au rayonnement thermique (W) dans le domaine infrarouge ainsi que ladite unité de traitement (4b), dans lequel un filtre optique commutable dans deux sensibilités spectrales au rayonnement thermique différentes est monté en amont du capteur de rayonnement thermique (4a), et dans lequel l'unité de traitement (4b) est conçue pour déterminer la valeur de température (TEMP) sur la base d'une pyrométrie proportionnelle.

7. Avertisseur de danger selon l'une quelconque des revendications précédentes, dans lequel le ou les capteurs de rayonnement thermique (4a) et l'unité de traitement (4b) sont réunis dans un composant sous forme de capteur de température (4) fonctionnant sans contact.

8. Avertisseur de danger selon l'une quelconque des revendications 2 à 7, dans lequel une partie du capot (22) correspondant en superficie approximativement à la surface de mesure (M) est réduite dans son épaisseur par rapport à la partie restante (21') du capot (22) et/ou est essentiellement découplée thermiquement de la partie restante (21').

9. Avertisseur de danger selon l'une quelconque des revendications précédentes, dans lequel le capteur de rayonnement thermique respectif (4a) comprend une surface de capteur (F) sensible au rayonnement thermique et une lentille optique (7) et/ou un conducteur optique (9) est disposé entre la ou les deux surfaces de capteur (F) d'un côté et la face intérieure (IS) du capot (21) conçue pour détecter la température ambiante (T) de l'autre côté, la lentille (7) et le conducteur optique (9) étant transparents à la lumière dans le domaine infrarouge moyen.

10. Avertisseur de danger selon l'une quelconque des revendications précédentes, dans lequel un capteur de gaz de fumée d'incendie est intégré dans l'avertisseur de danger et dans lequel au moins un orifice d'entrée (OF) pour les gaz de fumée d'incendie à détecter est disposé dans le boîtier d'avertisseur (2).

11. Avertisseur de danger selon l'une quelconque des revendications précédentes, comprenant un dispositif à lumière diffuse pour détecter des particules de fumée disposé dans ou sur le boîtier d'avertisseur (2).

12. Procédé pour déterminer une valeur de température (TEMP) dans l'environnement d'un avertisseur de danger (1) conçu sous forme de détecteur ponctuel, dans lequel un rayonnement thermique (W) émis par une face intérieure (IS) d'un capot d'avertisseur (21) est détecté sans contact sous forme de signal de capteur (SIG) au moyen d'un capteur de rayonnement thermique (4a) sensible à celui-ci, notamment au moyen d'une thermopile ou d'un bolomètre, et dans lequel la valeur de température (TEMP) dans l'environnement de l'avertisseur de danger (1) est déterminée par calcul et fournie à partir du signal de capteur (SIG) en considérant le coefficient d'émissivité pour le rayonnement thermique fonction du matériau et/ou de l'état de surface de la face intérieure (IS) du capot d'avertisseur (21).

13. Procédé pour déterminer une valeur de température (TEMP) dans l'environnement d'un avertisseur de danger (1) conçu sous forme de détecteur ponctuel, dans lequel un rayonnement thermique (W) émis par une face intérieure (IS) d'un capot d'avertisseur (21) est détecté sans contact au moyen de deux capteurs de rayonnement thermique (4a) sensibles à celui-ci, notamment au moyen de deux thermopiles ou de deux bolomètres, à chaque fois sous forme de signal de capteur (SIG), les deux capteurs de rayonnement thermique (4a) présentant des sensibilités spectrales au rayonnement thermique différentes et la valeur de température (TEMP) de l'environnement de l'avertisseur de danger (1) étant déterminée et fournie à partir des deux signaux de capteur (SIG) sur la base d'une pyrométrie proportionnelle.
